# EUROPEAN PATENT SPECIFICATION

(11) **EP 0 678 319 B1**
(45) Date of publication and mention of the grant of the patent: **08.09.1999**
(21) Application number: 95302701.8
(22) Date of filing: 21.04.1995
(51) Int. Cl.: B01D 35/10, B01D 24/04, B01D 24/08, B01D 29/05, B01D 29/15

(54) **Apparatus and method for filtering a fluid**
Vorrichtung und Verfahren zum Filtrieren eines Fluids
Dispositif et procédé pour la filtration de fluides

(30) Priority: 22.04.1994 GB 9408009
(43) Date of publication of application: 25.10.1995
(73) Proprietor: T.M. PRODUCTS LIMITED, Winchester, Hampshire S023 0LL (GB)
(72) Inventor: Carlslaw, David Workman, Littleton, Winchester,Hampshire S022 6QJ (GB); Stevenson, David Gordon, Newtown, Newbury, Berks. (GB)
(74) Representative: Johnson, Terence Leslie

(56) References cited:
- EP-A- 0 082 520
- EP-A- 0 259 000
- EP-A- 0 280 052
- EP-A- 0 358 543
- FR-A- 1 433 351
- GB-A- 1 013 069

## Description

The invention relates to an apparatus and method for filtering a fluid, particularly a liquid.

It is often necessary to filter liquids which contain fine particles, for example colloids or microbiological material which ultimately blocks interstices or parts of a filter medium through which the liquid is passed, particularly where the filter media is a mass of particles or fibres which are compressed for filtering to ensure restricted flow paths to ensure an efficient filtering by the fibres. It is then necessary to clean the interstices which is not a simple operation and can require expensive machinery to effect a cleaning operation. A device according to the preamble of claim 1 herein can be found for example in EP-A-0358543. An inflatable device for compressing the filter media is known from GB-A-1013069.

It is accordingly an object of the invention to seek to mitigate these disadvantages.

According to the invention there is provided an apparatus for filtering a fluid, comprising a body containing a compressible mass of filter media and a device internally of the body adapted to compress the filter media during filtering, characterised in that the device comprises an inflatable device, there being means between the inflatable device and the mass of filter media for bearing on the mass to compress same when the inflatable device is inflated.

This provides an efficient yet relatively simple construction, particularly when the bearing means comprises a piston.

The piston may have an opening through which an inlet conduit for the fluid may enter into the piston, which piston may comprise a perforated base through which the fluid passes to the filter media. This provides a relatively simple construction for distributing the fluid to the filter media.

The inflatable device may comprise a flexible, inflatable bag-like device. This is a relatively inexpensive device which nevertheless provides an even pressure on the surface area of the piston.

The conduit may be substantially centrally located, and there may be a laterally displaced outlet conduit for fluid filtered by the mass. This provides a relatively compact arrangement.

The body may have a removable part for providing access to the interior of the body. This provides for ease of maintenance.

The bag-like device may be inflatable with air from a source. This provides a relatively simple means of inflation. The inflatable device may comprise a substantially toroidal device and the bearing means may comprise a substantially toroidal manifold, for entry of fluid to be filtered, between the filter media and the bearing device. This provides an efficient alternative construction.

The toroidal inflatable device may comprise a rubber-like material. Again this provides a relatively inexpensive apparatus.

The bearing device may comprise a plurality of perforated tubes extending substantially in parallel with one another and which may be connected by a connector arrangement to form a toroidal-like device. This provides a relatively simple inlet for the fluid.

The mass filter media may be toroidal in transverse section to define a core and may have in the core a perforated tube for receiving filtered fluid. This provides a relatively simple construction of outlet for filtered fluid.

There may be an inlet manifold for fluid to be filtered which may connect with open ends of the tubes of the bearing device. This provides for an even distribution of incoming fluid.

There may be a cushion ring for the inflatable toroidal device. This helps to prolong the life of the toroidal device.

Alternatively, there may be a substantially toroidal mass of filter media defining a core in which the inflatable device may be mounted for compressing the filter media mass. This provides a construction in which the inflatable device is internally mounted with respect to the body and the mass of filter media.

The inflatable device may be inflated with air.

The fluid being filtered may comprise a liquid.

Apparatus for filtering a fluid is hereinafter described, by way of example, with reference to the accompanying drawings.
Fig. 1 shows a longitudinal schematic sectional view of a first embodiment of apparatus according to the invention;
Fig. 2 is a longitudinal schematic sectional view of a second embodiment of apparatus according to the invention;
Fig. 2A shows to an enlarged scale a part of the apparatus of Fig. 2;
Fig. 3 shows a schematic longitudinal sectional view of a third embodiment of apparatus according to the invention;
Fig. 4 shows to an enlarged scale a part of the apparatus of Fig. 3;
Fig. 5 shows to an enlarged scale an end elevational view of a divider plate of the apparatus of Figs. 3 and 4;
Fig. 6 shows a schematic longitudinal sectional view of a fourth embodiment of apparatus according to the invention;
Fig. 7 shows to an enlarged scale an end elevation of a spool plate of the apparatus of Fig. 6; and
Fig. 8 shows a hydraulic layout for the embodiments of Figs. 3 to 7.

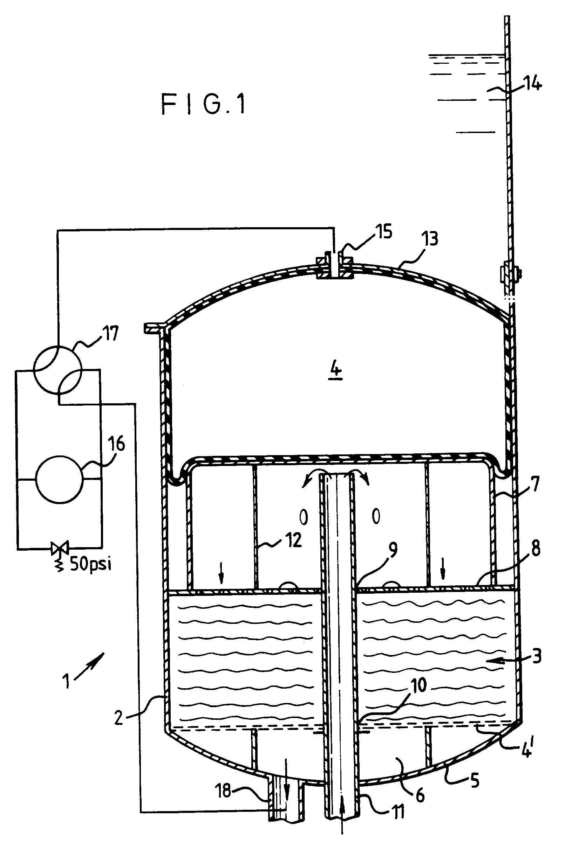

Referring to the drawings, in which like parts are shown by like reference numerals, there is firstly shown in Figs. 1 - 2A apparatus 1, 100 for filtering a fluid particularly a liquid, comprising a body 2 containing a compressible mass of filter media 3 and a device 4, in the embodiments inflatable, internally of the body adapted to compress the filter media 3 during filtering.

In the first embodiment shown in Fig. 1, the filter media 3 is a mass of fibres supported on a perforated lower (as viewed) plate 4' which defines with a base 5 of the body 2 a sump 6. Supported on the upper (as viewed) surface of the mass of fibres 3 is a piston 7 which has a lower (as viewed) perforated plate 8 which bears on substantially the whole surface area of the media mass 3. The plate 8 has a substantially central orifice 9, aligned vertically with an orifice 10 in the plate 4', which receives a fixed inlet pipe or conduit 11, the upper (as viewed) end of which terminates interiorly of the piston 7, which has a perforated cylindrical internal wall 12. Bearing on the piston 7 is the inflatable means 4 which is in the form in the embodiment shown of a rubber or rubber-like material bag or sack which fills substantially the internal volume of the body 2 above the piston 7. The upper surface of the body 2 is in the form of a removable part or closer 13, in the embodiment of domed configuration. It is removable for inspection, cleaning, renovation, charging or recharging of the media etc. and does not require a gasket as the rubber bag 4, which is flexible and inflatable, provides an integral gasket.

There is an integral wash tank 14 in the embodiment shown but this may be omitted.

The domed part 13 has a connection 15 to the bag 4 for passing, in the embodiment, air from a source including a pump 16 with a four-way valve 17, the pressure being 50 psi.

In operation, the bag 4 is inflated to bear on the piston 7 which in turn acts as a bearing means in that it bears down on the fibres forming the mass of filter media 3. The interstices between the fibres are thus reduced but not closed off so that liquid to be filtered passes through extended yet restricted flow paths to effect filtering. The liquid enters up the conduit 11, passes over the whole surface area of the piston 7 via the perforated plate 8 after passing through the wall 12 and enters the media 3, exiting through the perforated plate 4' to an outlet conduit 18 leading from the sump 6.

From time to time, the filter media 3 requires to be cleaned of particles such as colloids clogging the flow paths.

This is effected by deflating the bag 4, at least partially, so that pressure is released from the fibre mass 3, which can then expand, thereby deconstricting the flow paths.

Clean backwash fluid is then passed upwardly through the pipe 18, through the plate 4', thence through the media 3, through the plate 8, thence down through the pipe 11 to exit. The liquid flow is thus in the reverse direction to that shown by the arrows in Fig. 1. The backwash loosens the material blocking the media, and carries it away with the backwashing media. The bag 4 remains deflated during this operation. When the backwash step is over, the bag 4 is inflated once more for the next filtration step.

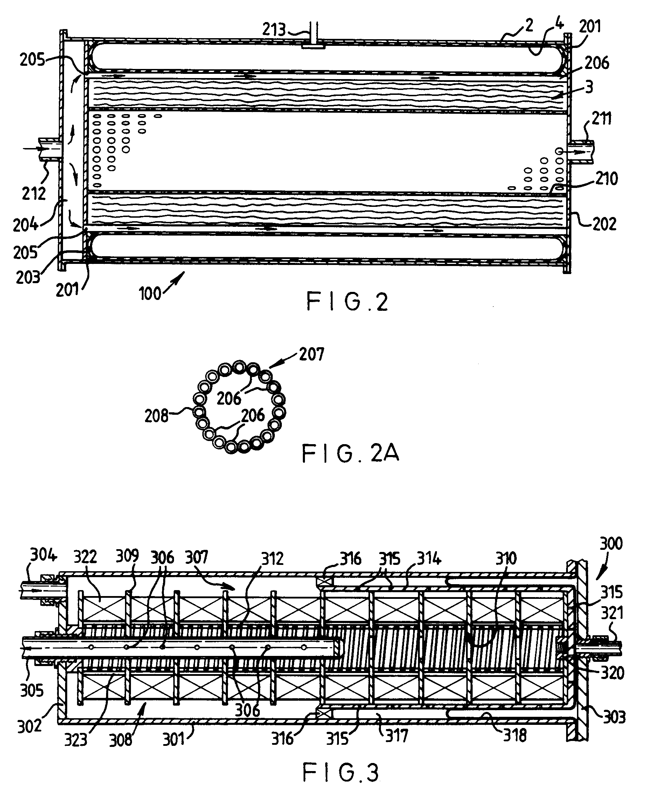

Turning now to Fig. 2, the embodiment 100 shown operates in a similar manner to Fig. 1. The body 2 is cylindrical, and houses a substantially cylindrical, toroidal in cross-section inflatable device 4 in the form of a rubber or rubber-like material tyre-like device which is supported against chafing at its extremities by a cushion ring 201. The inflatable device 4 extends between an end wall 20 and a wall 203 of an inlet manifold 204 of the apparatus 100 which wall 203 has through orifices 205 aligned with tubes 206 of cylindrical tubular distribution manifold or palisade manifold 207 (Fig. 2A) which comprises a plurality of substantially parallel, perforated tubes 206 connected together to form a toroid by a connection arrangement in the form of webbing 208. The distribution manifold 208 is between the inflatable device 4 and the mass of filter media 3, in the form of a cylindrical tube of fibres defined by a core 209 in which there is a perforated cylinder or core tube 210.

The end wall 202 has an outlet conduit 211, and the inlet manifold 204 an inlet conduit 212.

In use, during filtering the inflatable device 4 is inflated through a connection 213 to bear on the distribution manifold 208 or palisade tubes 206 which in turn bear on and compress or compact the fibres 3 as before (Fig.1) for filtering. The liquid to be filtered is passed into the apparatus 100 through the conduit 212 to the inlet manifold 204, through the distribution manifold 208 via the orifices 205 in the wall 203, to be filtered through the fibres 3. The filtered liquid passes through the perforations in the core tube 210 to the core 209, and passes out through the conduit 211.

To backwash when necessary, the inflatable device 4 is deflated so opening up the flow paths through the fibres 3, and the backwash liquid enters the apparatus through the conduit 211, into the core tube 209, through the perforations therein, through the media 3, through the distribution manifold 208 to the core 209, through the core tube 210 and out through the inlet manifold 204 to the conduit 212, in a direction opposite to the flow direction shown by the arrows, for filtering. When the media is cleaned by the backwashing step, the inflatable device 4 is reinflated for filtering as before.

Referring now to the embodiment of Figs. 3 to 5, the apparatus 300 shown therein is cylindrical with a cylindrical body or outer cylinder 301 which has end plates 302 and 303. The end plate 302 has a connector such as a screw connection for a radially arranged inlet tube 304 for liquid to be cleaned. There is an axial outlet 305 for filtered liquid, in the form of an axial cylindrical tube or core having peripheral through holes 306. Internally of the body 301 and spaced from the internal surface thereof is a filter device 307 in the form of a plurality, in the embodiment ten, separate filter elements 308, each element 308 being defined by a divider plate 309 having a central bore 310 for receiving the axial outlet tube or core 305 and for providing liquid flow, and an annular recess, groove or depression 311 for receiving resilient means such as a stainless steel spring 312 of each filter element 308. The dividers 309 each have a series of peripheral through holes 313 for passage of liquid.

There is also internally of the body 301 a piston 314 which is perforated at 315 at its free end over a distance in the embodiment substantially equal to the axial length of one filter element 308, although the perforations 315 could extend over the length of the piston 314. The piston 314 is supported on supports or pads 316, there being six in the embodiment, spaced equidistantly round the inner circumference of the body 301. The inner surface of the piston 314 receives the periphery of the respective divider plates 309 in sliding relation, the respective peripheries being rounded to facilitate sliding. The blocks 316 space the piston 314 from the inner surface of the body 301. In the annular space 317 between the piston 314 and the body 301 there is a diaphragm 318 which extends along the body 314 and is folded back on itself to form a closed volume for receiving liquid. The diaphragm is flexible, in the form of a "rolling" rubber seal in the embodiment illustrated. The seal 318 is thus annular, and is held at its periphery between the end plate 303 and a further plate 319 having a central boss 320. There is also an inlet 321 for liquid for entering the closed volume in order to push the piston 314 to the left as viewed.

The filter elements 308 each comprise as a filter medium a springy synthetic fibre 322, or yarn made of crimped springy fibres such as polyester or nylon, suitably manufactured or wound to the desired configuration. The medium is thus fibrous, being manufactured to form a bonded wadding or wound from a yarn in a cylindrical form as shown, either as one cylinder or a stack or series of cylinders or discs (i.e. substantially in the latter case parallel to the divider plates). The medium 322 may also comprise a single homogenous filter material or there may be two or more layers of different density or fibre thickness, to provide successively finer filtration in the direction of flow. The fineness of filtration may increase either radially inwardly or outwardly depending on the direction of flow.

The springs 312 support the medium 322 against the applied pressure of filtration.

Between the springs 312 and the medium 322 in each element 308 is a layer of wadding or support material 323 such as polyester under the filter medium. This provides a firm seating for the medium and obviates jamming thereof between the coils of the spring 312.

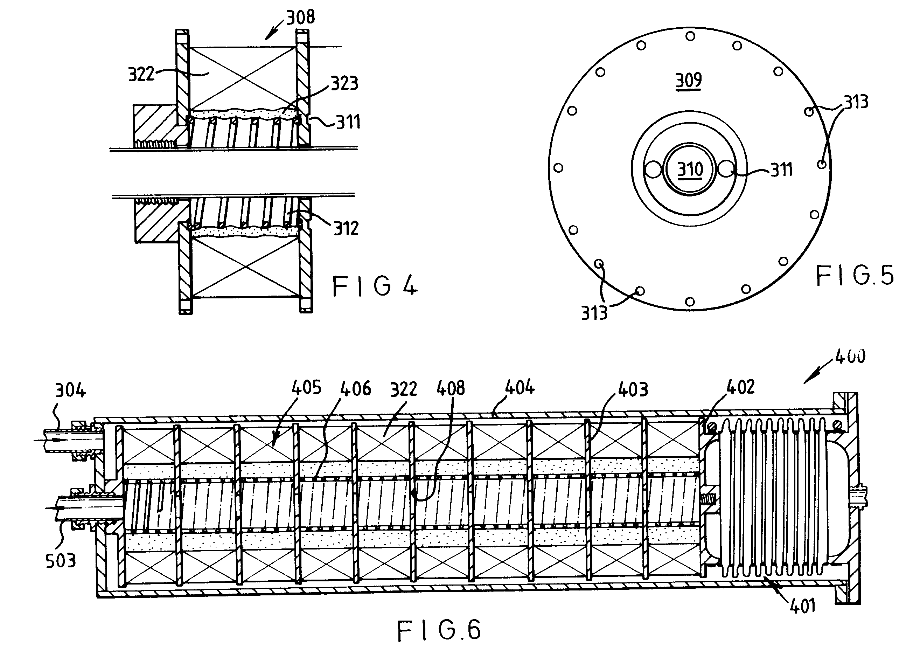

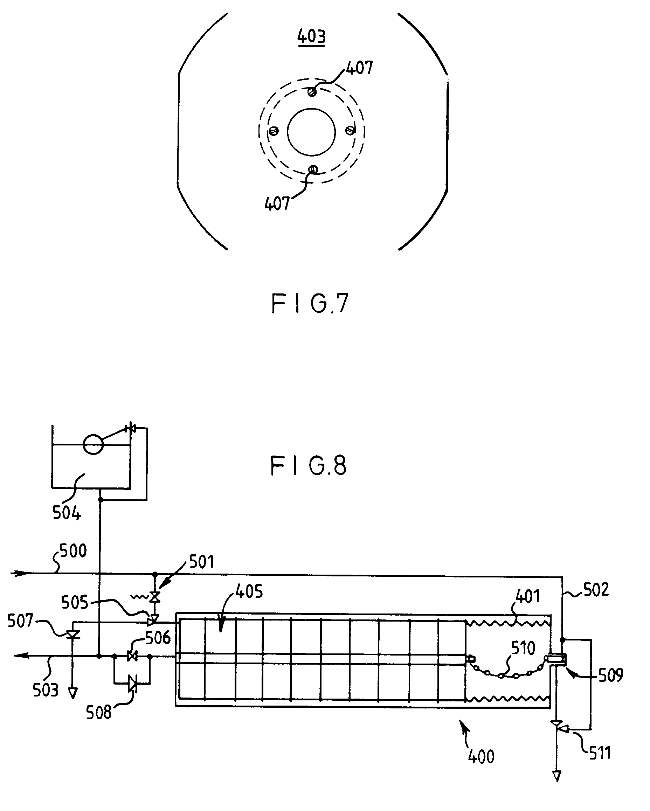

In Figs. 6 and 7, there is shown a further embodiment 400 in which the flexible, "rolling" diaphragm seal and piston arrangement is replaced by a bellows 401 acting on an end plate 402, divider plates 403 extending nearly to the inner surface of the body 404, so that there is an annular space for flow of liquid to the filter elements 405 over the whole body length, excluding the bellows. Also, the springs 406 are retained by protuberances or location pips 407 (four in the embodiment) to retain the spring 406 in the desired radial disposition.

Otherwise, the filter elements 405 are similar to those 308 of the apparatus 300.

Fig. 8 shows schematically external flow connections of the apparatus 400 of Fig. 6, though a similar arrangement would obtain for that of Fig. 3. The filter itself 400 is connected via a pipe 500 to a source of water to be filtered and fed through a spring loaded valve 501 which maintains a differential pressure across the bellows 401 which is transmitted via a pipe 502. The filtrate emerges via a pipe 503, which is connected to a clean water reservoir 504. The axial compression force is therefore controlled by the pressure across valve 501 and is independent of the pressure loss across the filter medium.

When the filter 400 is to be backwashed valves 505 and 506 are closed and the compression released and reapplied cyclically. Non-return valves 507 and 508 allow water to be drawn in from the reservoir 504 and pumped out to drain. Valve 501 would normally remain shut at this point and be isolated by valve 508 which is a three way valve at the junction from valve 501.

In an embodiment (not shown) where a self-acting compression/relaxation system is desired a suitable valve device, such as a spool valve 509 with a lost motion link 510, is incorporated into the bellows connection so that the valve is moved at the end of each stroke to admit raw water under pressure and to discharge to drain. This spool valve 509 may be locked out during filtration by a 3-way valve 511. Valves 505, 507 and 511 may be linked to provide a single changeover from filtration to backwashing.

In operation to filter a liquid, in both the embodiments of Figs. 3 and 6, the filter elements 308, 405 are compressed as tightly as possible. In the case of the Fig. 3 embodiment, the piston 314 is moved on inflation of the diaphragm seal 318 to the left hand (as viewed) filter element 308. The liquid to be filtered passes through the inlet 304 through the peripheral holes 313 in the divider plates 309 and the perforations 315 in the piston 314, so that it passes through all the filter elements 308 for effective filtration, before the filtrate passes out of the outlet 305 having entered the axial core 305 through the holes 306. In the Fig. 6 embodiment, the bellows 401 is expanded to the amount to give the desired compression of the filter elements 405, the liquid to be filtered passing through the inlet 304, along the annular space between the divider plates 403 and the body 404, into all of the filter elements 405, through the filter medium 322 and thence out of the outlet 503, through the core defined by the springs 406 and through central holes 408 in the divider plates 403.

When it is desired to wash the filters, the springs assist the resilience of the medium to expand when the compression force is removed, as will be the case when the medium is to be backwashed for cleaning. For cleaning the medium after filtration the resilient medium, assisted by the springs, may be allowed to draw in or may be fed with clean water from an external reservoir or from a clean water manifold. If non-return valves are included in the external connections repeated compression and relaxation may be used to pump the clean water in a reverse (with respect to the direction of filtration) direction for backwashing, without the need for a separate pump.

Cleaning of the filter medium involves the repeated compression and relaxation of the medium generally simultaneously with a reverse flow of fluid. Such repeated compression may employ the same means as used for the compression required for filtration, and the repetition may be achieved by external reversing of the compression fluid or by a suitable valve arrangement which is integral with the compression device and self-actuating.

It is a feature of all embodiments of the filtration apparatus that the pressure required for inflation of the inflation device shall preferably be obtained from the driving pressure differential across the system, controlled by a pressure reducing valve either to maintain a fixed differential or to maintain a fixed pressure across the system, depending on the characteristics of the medium.

In a multiple installation many such filters may be connected in parallel and operated as one, and operation need only involve a single control valve or pair of valves for the set.

In addition to the above arrangements the medium may be compressed by a spring or springs so that the medium at rest is compressed rather than being relaxed. In this case the compression spring must overcome the force of the core springs. The actuating means must then be reversed, for example by the use of a central push rod or by the use of vacuum, to relax the medium when it is to be washed.

It will be understood that various other modifications may be possible. For example, the liquid flow may be the reverse of that shown, for example the inlet flow may be axial and the outlet radially arranged. Stated in another way, the inlet may be the outlet, and vice versa. Also, there may be a double-ended embodiment, that is there may be inlets and outlets at both ends of the body.

Also, the springs may comprise an equivalent springy material, a perforated elastomeric ring or cylinder, or intermeshing toothed crown rings. These all provide a central channel for entry or exit of liquid (depending on the direction of flow) and compressibility when the piston diaphragm seal arrangement or bellows is inflated. In this regard, compression (and relaxation) may be provided by suitable means other than a piston/diaphragm arrangement or bellows, for example a manually operable level or screw, or a hydraulic or pneumatic ram, though the arrangements described are preferred as they derive their inflation pressure, as described with reference to Fig. 8, from the same source as the pressure for filtration.

It will be understood too that by providing the direction of filtration as either radially inwardly or outwardly as in the third and fourth embodiments, a relatively larger surface area of filter medium can be presented to the liquid flow, and therefore the velocity of filtration through a typical configuration of the filter medium will be less. This reduces the pressure loss in the apparatus, increases the solids' capacity (i.e. the power to remove solids on filtration) and can improve efficiency.

In all embodiments, the filter medium is essentially a fibrous medium under compression. In the third and fourth embodiment, the medium is compressed axially, its strength in the circumferential direction maintaining it as a cylinder or set of discs.

Furthermore, it will be understood that the series of cylindrical filter elements shown in Figs. 3 and 6 may be compressed uniformly or differentially for example to vary the density of the medium in the direction of flow, whether this is radially inwardly or outwardly.

Thus the divider plates may be of a thickness which varies in the direction of a diameter thereof (a flat conical or "discus" shape), or the divider plates may be wider at their circumference than at the centre (axis of the body).

It will be understood that other modifications may be possible. Thus the inflatable device 4 may be in the core 209 of the media 3 in Fig. 2, in which case it may be a cylindrical inflatable device, and the distribution manifold 208 will again be between it and the media, the outlet for filtered liquid being towards the periphery of the body.

Also, in all embodiments, the filter media may be of any suitable material rather than fibres, for example, rings, particles or the like. Also, the media may be electrically conductive, and electrodes may be incorporated in order to apply an electrical potential between the electrodes to enhance filtration or other treatment such as de-colouring the liquid.

## Claims

1. Apparatus (1,100,300,400) for filtering a fluid, comprising a body (2,301,401) containing a compressible mass of filter media (3,307,405) and a device (4,318,401) internally of the body adapted to compress the filter media during filtering, characterised in that the device (4,318,401) comprises an inflatable device, there being means (7,207,314,402) between the inflatable device (4,318,401) and the mass of filter media for bearing on the mass to compress same when the inflatable device is inflated.

2. Apparatus according to Claim 1, the bearing means comprising a piston (7).

3. Apparatus according to Claim 2, the piston (7) having an opening (9) through which an inlet conduit (11) for the fluid extends into the piston, which piston comprises a perforated base (8) through which the fluid passes to the filter media.

4. Apparatus according to Claim 3, the inflatable device (4) comprising a flexible, inflatable bag-like device.

5. Apparatus according to Claim 3 or Claim 4, the conduit (11) being substantially centrally located, and there being a laterally displaced outlet (18) conduit for fluid filter by the mass.

6. Apparatus according to either of Claims 4 or 5, the body having a removable part (13) for providing access to the interior of the body.

7. Apparatus according to any of Claims 4 to 6, the bag-like device (4) being inflatable with air from a source.

8. Apparatus according to Claim 1, the inflatable device (4) comprising a substantially toroidal device and the bearing means comprising a substantially toroidal manifold (207), for entry of fluid to be filtered, between the filter media and the bearing device.

9. Apparatus according to Claim 8, the toroidal inflatable device (4) comprising a rubber-like material.

10. Apparatus according to Claim 8 or Claim 9, the bearing device comprising a plurality of perforated tubes extending substantially in parallel and being connected by a connector arrangement (208) to form a toroidal-like device.

11. Apparatus according to Claim 10, the connector arrangement (208) comprising webbing.

12. Apparatus according to Claim 10 or Claim 11, the mass filter media being toroidal in transverse section to define a core (209) and having on the core a perforated tube (210) for receiving filtered fluid.

13. Apparatus according to Claim 12, including an inlet manifold (204) for fluid to be filtered which connects with open ends of the tubes of the bearing device.

14. Apparatus according to any of Claims 4 to 13, comprising a cushion ring (201) for the inflatable toroidal device.

15. Apparatus according to Claim 1, comprising a substantially toroidal mass of filter media (307) defining a core in which the inflatable device (318) is mounted for compressing the filter media mass.

16. Apparatus according to Claim 1, the device comprising a piston device (314) and rollable diaphragm device (318).

17. Apparatus according to Claim 16, the piston being cylindrical and being adapted to slide over the filter media.

18. Apparatus according to Claim 17, the piston comprising perforations (315) for passage of fluid.

19. Apparatus according to Claim 1, the device (401) comprising bellows.

20. Apparatus according to any of Claims 16 to 19, the filter media comprising a plurality of filter elements (405) arranged in series in the body.

21. Apparatus according to Claim 20, each filter element (405) comprising a fibrous medium made from a bonded wadding or a wound yarn, central resilient means and an intermediate support.

22. Apparatus according to Claim 21, the medium comprising different densities of fibre thickness.

23. Apparatus according to any of Claims 20 to 22, the filter elements (405) being spaced apart by divider plates (403).

24. Apparatus according to Claim 23, the divider plates (403) being profiled to provide a differential compression of the media.

25. A method of filtering a fluid with an apparatus according to any of Claims 1 to 24, comprising a fluid to be filtered towards a mass of compressible filter media, compressing same by inflating the inflatable device internally of the body for compressing the media, filtering the fluid, and, after filtering, allowing the filter media to expand by deflating the inflatable device, and backwashing the mass of expanded compressible filter media.

26. A method according to Claim 25, comprising inflating the inflatable device with air or with liquid to be filtered.

## Patentansprüche

1. Vorrichtung (1, 100, 300, 400) zum Filtrieren eines Fluids, die folgendes umfaßt: einen Körper (2, 301, 401), der eine zusammendrückbare Masse von Filtermitteln (3, 307, 405) enthält, und im Inneren des Körpers eine Einrichtung (4, 318, 401), die dazu angepaßt ist, die Filtermittel während des Filtrierens zusammenzudrücken, dadurch gekennzeichnet, daß die Vorrichtung (4, 318, 401) eine aufblasbare Einrichtung umfaßt, wobei zwischen der aufblasbaren Einrichtung (4, 318, 401) und der Masse von Filtermitteln Mittel (7, 207, 314, 402) zum Aufliegen auf der Masse vorhanden sind, um dieselbe zusammenzudrücken, wenn die aufblasbare Einrichtung aufgeblasen wird.

2. Vorrichtung nach Anspruch 1, wobei das Aufliegemittel einen Kolben (7) umfaßt.

3. Vorrichtung nach Anspruch 2, wobei der Kolben (7) eine Öffnung (9) aufweist, durch die sich eine Einlaßleitung (11) für das Fluid in den Kolben erstreckt, welcher eine perforierte Basis (8) umfaßt, durch die das Fluid zu den Filtermitteln gelangt.

4. Vorrichtung nach Anspruch 3, wobei die aufblasbare Einrichtung (4) eine flexible, aufblasbare taschenartige Einrichtung umfaßt.

5. Vorrichtung nach Anspruch 3 oder Anspruch 4, wobei die Leitung (11) im wesentlichen zentral angeordnet ist und wobei für Fluid, das durch die Masse filtriert wurde, eine seitlich verschobene Auslaßleitung (18) vorhanden ist.

6. Vorrichtung nach einem der Ansprüche 4 oder 5, wobei der Körper ein entfernbares Teil (13) dazu aufweist, einen Zugang zum Inneren des Körpers bereitzustellen.

7. Vorrichtung nach einem der Ansprüche 4 bis 6, wobei die taschenartige Einrichtung (4) mit Luft von einer Quelle aufblasbar ist.

8. Vorrichtung nach Anspruch 1, wobei die aufblasbare Einrichtung (4) eine im wesentlichen ringförmige Einrichtung umfaßt und das Aufliegemittel zwischen den Filtermitteln und der Aufliegeeinrichtung zum Eintritt von zu filtrierendem Fluid einen im wesentlichen ringförmigen Verteiler (207) umfaßt.

9. Vorrichtung nach Anspruch 8, wobei die ringförmige aufblasbare Einrichtung (4) ein gummiartiges Material umfaßt.

10. Vorrichtung nach Anspruch 8 oder Anspruch 9, wobei die Aufliegeeinrichtung eine Mehrzahl perforierter Röhren umfaßt, die sich im wesentlichen parallel zueinander erstrecken und mittels einer Verbinderanordnung (208) dazu verbunden sind, eine ringformartige Einrichtung zu bilden.

11. Vorrichtung nach Anspruch 10, wobei die Verbinderanordnung (208) Zwischengewebe umfaßt.

12. Vorrichtung nach Anspruch 10 oder Anspruch 11, wobei die Massenfiltermittel in Querrichtung im Querschnitt ringförmig sind, um einen Kern (209) zu definieren, und auf dem Kern eine perforierte Röhre (210) zur Aufnahme filtrierten Fluids aufweisen.

13. Vorrichtung nach Anspruch 12, die einen Einlaßverteiler (204) für zu filtrierendes Fluid umfaßt, der mit offenen Enden der Röhren der Aufliegeeinrichtung verbunden ist.

14. Vorrichtung nach einem der Ansprüche 4 bis 13, die einen Pufferring (201) für die aufblasbare ringförmige Einrichtung umfaßt.

15. Vorrichtung nach Anspruch 1, die eine im wesentlichen ringförmige Masse von Filtermitteln (307) umfaßt, welche einen Kern definiert, in dem die aufblasbare Einrichtung (318) zum Zusammendrücken der Filtermittelmasse angebracht ist.

16. Vorrichtung nach Anspruch 1, wobei die Einrichtung eine Kolbeneinrichtung (314) und eine wälzbare Membraneinrichtung (318) umfaßt.

17. Vorrichtung nach Anspruch 16, wobei der Kolben zylindrisch ist und dazu angepaßt ist, über die Filtermittel zu gleiten.

18. Vorrichtung nach Anspruch 17, wobei der Kolben Perforationen (315) zum Durchgang von Fluid umfaßt.

19. Vorrichtung nach Anspruch 1, wobei die Einrichtung (401) einen Blasebalg umfaßt.

20. Vorrichtung nach einem der Ansprüche 16 bis 19, wobei die Filtermittel eine Mehrzahl von Filterelementen (405) umfassen, die in Reihe in dem Körper angeordnet sind.

21. Vorrichtung nach Anspruch 20, wobei jedes Filterelement (405) ein faseriges Mittel, das aus einer Vlieswattierung bzw. einem gewickelten Garn gefertigt ist, ein mittleres federndes Mittel und eine Zwischenstütze umfaßt.

22. Vorrichtung nach Anspruch 21, wobei das Mittel verschiedene Dichten bzw. Faserdicken umfaßt.

23. Vorrichtung nach einem der Ansprüche 20 bis 22, wobei die Filterelemente (405) mittels Teilungsplatten (403) voneinander beabstandet sind.

24. Vorrichtung nach Anspruch 23, wobei die Teilungsplatten (403) dazu profiliert sind, eine unterschiedliche Zusammendrückung der Mittel bereitzustellen.

25. Verfahren zum Filtrieren eines Fluids mit einer Vorrichtung nach einem der Ansprüche 1 bis 24, das folgendes umfaßt: das Leiten eines zu filtrierenden Fluids auf eine Masse zusammendrückbarer Filtermittel zu, das Zusammendrücken derselben dadurch, daß die aufblasbare Einrichtung im Inneren des Körpers zum Zusammendrücken der Mittel aufgeblasen wird, das Filtrieren des Fluids und, nach dem Filtrieren, das Sich-Ausdehnen-Lassen der Filtermittel dadurch, daß die aufblasbare Einrichtung entleert wird, und das Rückspülen der Masse ausgedehnter zusammendrückbarer Filtermittel.

26. Verfahren nach Anspruch 25, welches das Aufblasen der aufblasbaren Einrichtung mit Luft bzw. mit zu filtrierender Flüssigkeit umfaßt.

## Revendications

1. Appareil (1, 100, 300, 400) pour filtrer un fluide, comprenant un corps (2, 301, 401) contenant une matière compressible de milieu filtrant (3, 307, 405) et un dispositif (4, 318, 401) à l'intérieur du corps, conçue pour comprimer le milieu filtrant au cours de la filtration, caractérisé en ce que le dispositif (4, 318, 401) comprend un dispositif gonflable, un moyen (7, 207, 314, 402) étant prévu entre le dispositif gonflable (4, 318, 401) et la matière de milieu filtrant pour appuyer sur la matière afin de la comprimer lorsque le dispositif gonflable est gonflé.

2. Appareil selon la revendication 1, dans lequel le moyen d'appui comprend un piston (7).

3. Appareil selon la revendication 2, dans lequel le piston (7) possède une ouverture (9) à travers laquelle s'étend un conduit d'entrée (11) pour le fluide jusque dans le piston, ledit piston comprenant une base perforée (8) à travers laquelle passe le fluide en direction du milieu filtrant.

4. Appareil selon la revendication 3, dans lequel le dispositif gonflable (4) comprend un dispositif gonflable flexible en forme de sac.

5. Appareil selon la revendication 3 ou 4, dans lequel le conduit (11) est situé essentiellement en position centrale et un conduit de sortie (18) décalé en position latérale est prévu pour le fluide filtré par la matière.

6. Appareil selon, soit la revendication 4, soit la revendication 5, dans lequel le corps possède une partie amovible (13) pour donner accès à l'intérieur du corps.

7. Appareil selon l'une quelconque des revendications 4 à 6, dans lequel le dispositif (4) en forme de sac peut être gonflé avec de l'air provenant d'une source.

8. Appareil selon la revendication 1, dans lequel le dispositif gonflable (4) comprend un dispositif de forme essentiellement toroïdale et le moyen d'appui comprend un collecteur (207) de forme essentiellement toroïdale pour l'entrée du fluide à filtrer, entre le milieu filtrant et le dispositif d'appui.

9. Appareil selon la revendication 8, dans lequel le dispositif gonflable (4) de forme toroïdale comprend une matière analogue à du caoutchouc.

10. Appareil selon la revendication 8 ou 9, dans lequel le dispositif d'appui comprend plusieurs tubes perforés s'étendant essentiellement en parallèle et étant connectés via un arrangement de connecteur (208) pour obtenir un dispositif de forme toroïdale.

11. Appareil selon la revendication 10, dans lequel l'arrangement de connecteur (208) comprend un assemblage simple de tubes sans entretoisement ou renforcement.

12. Appareil selon la revendication 10 ou 11, dans lequel la matière de milieu filtrant est de forme toroïdale en coupe transversale pour définir une partie centrale (209) et possède, sur la partie centrale, un tube perforé (210) pour recevoir le fluide filtré.

13. Appareil selon la revendication 12, englobant un connecteur d'entrée (204) pour le fluide à filtrer qui vient se raccorder aux extrémités ouvertes des tubes du dispositif d'appui.

14. Appareil selon l'une quelconque des revendications 4 à 13, comprenant un anneau d'amortissement (201) pour le dispositif gonflable de forme toroïdale.

15. Appareil selon la revendication 1, comprenant une matière de milieu filtrant (307) de forme essentiellement toroïdale définissant une partie centrale dans laquelle le dispositif gonflable (318) est monté à des fins de compression de la matière de milieu filtrant.

16. Appareil selon la revendication 1, dans lequel le dispositif comprend un dispositif à piston (314) et un dispositif à diaphragme roulant (318).

17. Appareil selon la revendication 16, dans lequel le piston est de forme cylindrique et est conçu pour glisser par-dessus le milieu filtrant.

18. Appareil selon la revendication 17, dans lequel le piston comprend des perforations (315) pour le passage du fluide.

19. Appareil selon la revendication 1, dans lequel le dispositif (401) comprend un soufflet.

20. Appareil selon l'une quelconque des revendications 16 à 19, dans lequel le milieu filtrant comprend plusieurs éléments filtrants (405) montés en série dans le corps.

21. Appareil selon la revendication 20, dans lequel chaque élément filtrant (405) comprend un milieu fibreux réalisé à partir d'un rembourrage collé ou d'un fil enroulé, d'un moyen résilient central et d'un support intermédiaire.

22. Appareil selon la revendication 21, dans lequel le milieu comprend différentes densités ou différentes épaisseurs de fibres.

23. Appareil selon l'une quelconque des revendications 20 à 22, dans lequel les éléments filtrants (405) sont espacés l'un de l'autre par des plaques de séparation (403).

24. Appareil selon la revendication 23, dans lequel les plaques de séparation (403) sont profilées pour procurer une compression différentielle du milieu.

25. Procédé de filtration d'un fluide avec un appareil selon l'une quelconque des revendications 1 à 24, comprenant le fait de: faire passer un fluide à filtrer en direction d'une matière de milieu filtrant compressible; comprimer ce dernier en gonflant le dispositif gonflable à l'intérieur du corps afin de comprimer le milieu; filtrer le fluide; et après la filtration, permettre au milieu filtrant de se détendre en dégonflant le dispositif gonflable; et soumettre à un lavage à contre-courant la matière de milieu filtrant compressible à l'état détendu.

26. Procédé selon la revendication 25, comprenant le fait de gonfler le dispositif gonflable avec de l'air ou avec le liquide à filtrer.
